# EUROPÄISCHE PATENTSCHRIFT

(11) **EP 2 526 332 B1**
(45) Veröffentlichungstag und Bekanntmachung des Hinweises auf die Patenterteilung: **28.12.2016**
(21) Anmeldenummer: 10700951.6
(22) Anmeldetag: 19.01.2010
(51) Int. Cl.: F16L 55/24

(54) **VORRICHTUNG ZUM BEFEUCHTEN EINES SCHÜTTGUTS**
DEVICE FOR WETTING A BULK GOOD
DISPOSITIF POUR HUMIDIFIER UN MATÉRIAU EN VRAC

(43) Veröffentlichungstag der Anmeldung: 28.11.2012
(73) Patentinhaber: Claudius Peters Projects GmbH, 21614 Buxtehude (DE)
(72) Erfinder: DIKTY, Mario, 21641 Apensen (DE); DEIMEL, Dominik, 21680 Stade (DE); GREISER, Carsten, 21037 Hamburg (DE)
(74) Vertreter: Glawe, Delfs, Moll
(86) Internationale Anmeldenummer: PCT/EP2010/000282
(87) Internationale Veröffentlichungsnummer: WO 2011/088842

(56) Entgegenhaltungen:
- WO-A1-02/081163
- DE-A1- 4 127 447
- DE-A1- 4 318 953
- DE-A1- 19 742 334
- US-A- 2 392 408
- US-A- 5 645 223

## Beschreibung

Die Erfindung betrifft eine Vorrichtung zum Befeuchten eines Schüttguts, insbesondere zum Befeuchten von Kraftwerksfilteraschen. Die Vorrichtung umfasst ein Fallrohr. Am obere Ende des Fallrohrs ist ein Einlass ausgebildet, durch den das Schüttgut in das Fallrohr eintritt. Am unteren Ende des Fallrohrs ist ein Auslass ausgebildet, durch den das Schüttgut in befeuchteten Zustand austritt. Es ist eine Wasserzuführung zu dem Fallrohr vorgesehen, und das Fallrohr weist einen flexiblen Wandabschnitt auf.

Es gibt Schüttgüter, die in trockenem Zustand zu Staubbildung neigen. Dazu gehört beispielsweise Asche, wie sie beim Betrieb eines Kraftwerks entsteht. Soll das Schüttgut aus dem Kraftwerk entsorgt werden, so kann die Umgebung durch den entstehenden Staub erheblich beeinträchtigt werden. Es ist bekannt, dass die Staubbildung bei diesen Schüttgütern durch Befeuchtung vermindert werden kann, siehe beispielsweise DE 41 27 447 und DE 197 42 334. Es zeigt sich allerdings, dass das Schüttgut, wenn es mit Wasser vermischt wird, dazu neigt, an der Innenwand des Fallrohrs festzuhaften und sich dort abzulagern.

In der DE 41 27 447 sind mehrere Maßnahmen gegen die Ablagerung des befeuchteten Schüttguts vorgeschlagen. So wird das Schüttgut in Drehung versetzt, bevor das Wasser zugeführt wird. Außerdem ist in dem Fallrohr ein Abstreifer vorgesehen, um Ablagerungen, die sich trotz der Drehung des Schüttguts bilden, wieder zu entfernen. Schließlich besteht die Wand in einem unteren Abschnitt des Fallrohrs aus einem flexiblen Material. Das flexible Material wird durch den Schüttgutstrom in Bewegung gehalten, so dass sich das Schüttgut dort nicht festsetzen kann. Eine solche Mehrzahl von Maßnahmen ist anfällig für Fehler und erfordert regelmäßige Wartung.

Der Erfindung liegt die Aufgabe zu Grunde, eine Vorrichtung zum Befeuchten von Schüttgütern vorzustellen, die einfach aufgebaut ist und bei der sich kein Schüttgut in dem Fallrohr ablagert. Ausgehend vom eingangs genannten Stand der Technik wird die Aufgabe gelöst durch die Merkmale des Hauptanspruchs. Erfindungsgemäß mündet die Wasserzuführung in dem flexiblen Wandabschnitt des Fallrohrs. Vorteilhafte Ausführungsformen finden sich in den Unteransprüchen.

Zunächst werden einige Begriffe erläutert. Unter einem flexiblen Wandabschnitt wird ein Abschnitt des Fallrohrs verstanden, in dem die Wand des Fallrohrs aus einem flexiblen Material besteht. Das flexible Material kann durch die Kräfte, die beim Betrieb der Vorrichtung auftreten, in elastische Bewegung versetzt werden.

Der Begriff Wasser im Zusammenhang mit der Befeuchtung des Schüttguts steht stellvertretend für alle Flüssigkeiten, die die Staubentwicklung vermindern, wenn sie dem Schüttgut zugeführt werden. Umfasst sind Frischwasser, Abwasser und verunreinigtes Wasser. Umfasst sind auch Flüssigkeiten, in denen der Hauptbestandteil ein anderer ist als Wasser. In dem Wasser können Feststoffe, beispielsweise Schwebstoffe enthalten sein.

Indem erfindungsgemäß die Wasserzuführung in dem flexiblen Wandabschnitt des Fallrohrs mündet, findet der Vorgang des Befeuchtens dort statt, wo die Wand des Fallrohrs durch den Schüttgutstrom in Bewegung versetzt wird. An der in Bewegung befindlichen Wand des Fallrohrs kann sich das Schüttgut allenfalls in geringem Umfang festsetzen.

Die Gefahr von Ablagerungen ist nicht auf den Bereich des Fallrohrs beschränkt, in dem das Wasser zugeführt wird. Vielmehr kann das Schüttgut sich auch weiter unten in dem Fallrohr ablagern, wo kein Wasser mehr zugeführt wird. Um diesen Ablagerungen vorzubeugen, kann vorgesehen sein, dass der flexible Wandabschnitt sich von der Wasserzuführung bis zum Auslass des Fallrohrs erstreckt. Das Schüttgut legt dann nach der Befeuchtung seinen gesamten Weg in einem Abschnitt des Fallrohrs zurück, in dem die Wand flexibel ist.

Die Wasserzuführung kann in dem flexiblen Wandabschnitt des Fallrohrs in einer einzigen Öffnung münden. Vorzugsweise mündet die Wasserzuführung in einer Mehrzahl von Düsen. Der Begriff Düse bezeichnet allgemein eine Mündung, durch die Wasser in das Fallrohr eintreten kann. Mit einer Mehrzahl von Düsen kann bei geeigneter Anordnung erreicht werden, dass das Wasser aus mehreren Richtungen auf den Schüttgutstrom trifft und das Schüttgut dadurch gleichmäßig befeuchtet wird. Die Düsen können auf einer Ebene des Fallrohrs angeordnet sein. Die Düsen können sich paarweise gegenüber liegen oder über den Umfang des Fallrohrs gleichverteilt sein. Umfasst sind auch Ausführungsformen, bei denen die Düsen in unterschiedlicher Höhe in dem Fallrohr angeordnet sind. Beispielsweise können die Düsen auf mehreren Ebenen in der Wand des Fallrohrs verteilt sein. Die Düsen können senkrecht zur Wand des Fallrohrs ausgerichtet sein oder unter einem Winkel in das Fallrohr münden.

Für eine gleichmäßige Befeuchtung des Schüttguts können die Düsen als Flachstrahldüsen ausgebildet sein, so dass der Wasserstrahl quer zu seiner Bewegungsrichtung in einer Dimension ausgedehnt ist. Der Flachstrahl kann parallel, quer oder schräg zum Schüttgutstrom ausgerichtet sein. Die Ausrichtung aller Flachstrahldüsen kann gleich sein. Möglich sind auch unterschiedliche Ausrichtungen, so dass beispielsweise ein Teil der Flachstrahldüsen parallel und einer anderer Teil quer zum Schüttgutstrom ausgerichtet ist.

Die Düsen können ortsfest angeordnet sein oder starr miteinander verbunden sein. Die Bewegungsfreiheit der flexiblen Wand des Fallrohrs ist dann durch die Düsen eingeschränkt. Eine Bewegung der flexiblen Wand ist nur im Bereich zwischen den fest angeordneten Düsen möglich. Alternativ kann vorgesehen sein, dass die Düsen unabhängig voneinander mit dem flexiblen Wandabschnitt verbunden sind. Bewegungen der Düsen relativ zueinander sind dann möglich, so dass die flexible Wand des Fallrohrs eine größere Bewegungsfreiheit hat. Die Wahrscheinlichkeit von Ablagerungen des Schüttguts wird durch diese Maßnahme weiter vermindert.

Es können flexible Leitungen vorgesehen sein, um den Düsen Wasser zuzuführen. Mit flexiblen Leitungen bleibt die Bewegungsfreiheit der Düsen erhalten. Gespeist werden können die flexiblen Leitungen beispielsweise aus einer ringförmigen Leitung, die sich um das Fallrohr herum erstreckt.

Dem Schüttgut sollen im Inneren des Fallrohrs möglichst wenig Ansatzpunkte für Ablagerungen geboten werden. Vorzugsweise ist die Innenwand des Fallrohrs deswegen glatt. Wenn - was nicht unbedingt erforderlich ist - sich an den flexiblen Wandabschnitt ein Abschnitt anschließt, in dem die Wand des Fallrohrs starr ist, so sollte der Übergang zwischen dem starren und dem flexiblen Wandabschnitt möglichst bündig sein. Die Düsen, über die das Schüttgut befeuchtet wird, sind in einer vorteilhaften Ausführungsform so gestaltet, dass sie nicht in den Innenraum des Fallrohrs hineinragen.

Außer den erwähnten Düsen, mittels derer der Schüttgutstrom befeuchtet wird, können Reinigungsdüsen in dem Fallrohr vorgesehen sein. Ablagerungen und Verunreinigungen, die sich trotz der erfindungsgemäß durchgeführten Befeuchtung festsetzen, können mithilfe der Reinigungsdüsen wieder entfernt werden. Die Reinigungsdüsen sind so gestaltet, dass sie in den Innenraum des Fallrohrs hineinragen. Vorzugsweise sind die Reinigungsdüsen so ausgerichtet, dass das Wasser unter einem spitzen Winkel von weniger als 45° auf die Innenwand des Fallrohrs auftrifft. Verunreinigungen und Ablagerungen werden dadurch von der Innenwand des Fallrohrs abgehoben und entfernt.

Die Reinigungsdüsen können als Zungendüsen ausgeführt sein, in denen das Wasser umgelenkt wird, so dass es im passenden Winkel auf die Innenwand des Fallrohrs trifft. In der Verlängerung der Düsenachse kann dazu eine Ablenkfläche vorgesehen sein, auf die der Wasserstrahl trifft und dadurch eine andere Richtung erhält.

Da in das Fallrohr hineinragende Elemente immer auch Ansatzpunkte für Ablagerungen des Schüttguts bilden, sind die Reinigungsdüsen vorzugsweise in einem Abschnitt des Fallrohrs angeordnet, in dem die Gefahr von Ablagerungen gering ist. Dies ist dort der Fall, wo der Schüttgutstrom noch trocken ist, also oberhalb der Wasserdüsen, durch die das Schüttgut befeuchtet wird. Die Reinigungsdüsen können in dem flexiblen Wandabschnitt des Fallrohrs angeordnet sein. Möglich ist es auch, dass die Reinigungsdüsen in einem starren Abschnitt des Fallrohrs angeordnet sind, der sich an den flexiblen Abschnitt anschließt.

Das Material des flexiblen Wandabschnitts kann ein Gummimaterial sein. Das Material darf nicht so flexibel sein, dass der Schüttgutstrom durch die Bewegung des Materials behindert wird. Um eine hinreichende Stabilität zu gewährleisten, können Verstärkungen für das Gummimaterial vorgesehen sein. Die Verstärkung kann beispielsweise ein sich spiralförmig durch das Gummimaterial erstreckender Draht sein.

Möglich ist es, dass das Schüttgut in einem Behälter oberhalb des Fallrohrs gelagert ist und aus dem Behälter heraus in das Fallrohr fällt. In einer alternativen Ausführungsform wird das Schüttgut dem Fallrohr in fluidisiertem Zustand zugeführt. Zu diesem Zweck können am Ausgang des Behälters Fluidisierelemente angeordnet sein, durch die dem Schüttgut ein Fluidisiergas zugeführt wird. Ein in fluidisiertem Zustand zugeführtes Schüttgut kann leichter befeuchtet werden.

Die Erfindung wird nachfolgend unter Bezugnahme auf die beigefügten Zeichnungen anhand vorteilhafter Ausführungsformen beschrieben. Es zeigen:
- Fig. 1:: eine schematische Darstellung einer erfindungsgemäßen Vorrichtung;
- Fig. 2 und 3:: Fallrohre bei anderen erfindungsgemäßen Ausführungsformen; und
- Fig. 4 bis 6:: Ausschnitte der flexiblen Wandabschnitte bei unterschiedlichen Ausführungsformen der Erfindung.

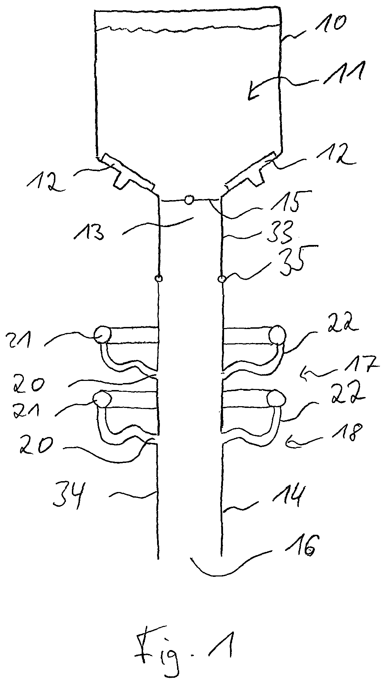

Eine in Fig. 1 gezeigte erfindungsgemäße Vorrichtung umfasst einen Vorratsbehälter 10, der mit einem Schüttgut 11 gefüllt ist. Das Schüttgut ist Asche, die beim Betrieb eines Kraftwerks entsteht. Am unteren Ende des Vorratsbehälters 10 sind Fluidisierelemente 12 angeordnet. Durch die Fluidisierelemente 12 kann Luft in das Schüttgut 11 geleitet werden, so dass das Schüttgut 11 in einen fluidisierten Zustand versetzt wird.

Der Vorratsbehälter 10 geht mit seinem unteren Ende in ein senkrecht angeordnetes Fallrohr 14 über. Der Auslass des Vorratsbehälters 10 bildet zugleich den Einlass 13 des Fallrohrs 14. Am Übergang von dem Vorratsbehälter 10 zu dem Fallrohr 14 ist ein Verschluss 15 ausgebildet, der in Fig. 1 in geschlossenem Zustand dargestellt ist. In geschlossenem Zustand verhindert der Verschluss 15, dass Schüttgut 11 aus dem Vorratsbehälter 10 austreten kann, der Verschluss 15 schließt den Vorratsbehälter 10 also nach unten ab. Wird der Verschluss 15 geöffnet, kann das Schüttgut 11 in fluidisiertem Zustand in das Fallrohr 14 eintreten. Vom Bereich des Einlasses 13 fällt das Schüttgut nach unten, bis es durch einen Auslass 16 aus dem Fallrohr 14 austritt.

Das Fallrohr 14 unterteilt sich in einen oberen Abschnitt 33 und einen unteren Abschnitt 34. Im oberen Abschnitt 33 besteht die Wand des Fallrohrs 14 aus Stahl, also einem nicht flexiblen Material. Es ist im oberen Abschnitt 33 eine nicht dargestellte verschließbare Öffnung ausgebildet, die zu Zwecken von Inspektion und Reinigung einen Zugang zum Inneren des Fallrohrs 14 ermöglicht. Um Ablagerungen des Schüttguts zu verhindern, ist die Innenwand des Fallrohrs 14 im oberen Abschnitt 33 glatt und mit einer haftungsmindernden Beschichtung versehen.

Im unteren Abschnitt, dem flexiblen Wandabschnitt 34, besteht die Wand des Fallrohrs 14 aus Gummi, das mit einer spiralförmigen Drahteinlage verstärkt ist. Das verstärkte Gummi ist ein flexibles Material. Bei 35 sind der Stahl des oberen Abschnitts 33 und das Gummi des flexiblen Wandabschnitts 34 auf geeignete Weise miteinander verbunden. In einer vorteilhaften Ausführungsform schließen der Stahl und das Gummimaterial bündig miteinander ab, so dass die Innenwand des Fallrohrs 14 im Übergangsbereich glatt ist. Alternativ kann das Gummimaterial auf einfache Weise mit dem oberen Abschnitt 33 verbunden werden, indem es außen aufgesteckt wird und mit einem Spannband gesichert wird.

Im flexiblen Wandabschnitt 34 des Fallrohrs 14 sind auf einer ersten Ebene 17 und einer zweiten Ebene 18 jeweils acht Düsen 20 angeordnet, die in Fig. 1 nur schematisch als Öffnungen in der Wand des Fallrohrs 14 dargestellt sind. Die Düsen 20 sind Flachstrahldüsen, die in Radialrichtung auf das Zentrum des Fallrohrs 14 ausgerichtet und gegenüber der Horizontalen leicht nach unten geneigt sind. Auf den Ebenen 17 und 18 sind die Düsen 20 jeweils über den Umfang gleichverteilt.

Für jede der Ebenen 17, 18 Uhr ist ein Ringrohr 21 vorgesehen, das das Fallrohr 14 umgibt. Von den Wasserdüsen 20 erstrecken sich jeweils Verbindungsleitungen 22 zu dem zugehörigen Ringrohr 21. Die Verbindungsleitungen 22 bestehen aus einem flexiblen Material, sind also nicht starr. Den Ringrohren 21 wird durch eine nicht dargestellte Zuführleitung Wasser zugeführt, das unter Druck steht. Das Wasser kann ein Abwasser sein, in einem Kraftwerk beispielsweise das Abwasser einer Rauchgasentschwefelungsanlage. Das Wasser gelangt über die Ringrohre 21 und die flexiblen Verbindungsleitungen 22 zu den Wasserdüsen 20 und tritt von dort in das Fallrohr 14 ein, wo es auf den durch das Fallrohr 15 fallenden Schüttgutstrom trifft. Das Wasser dringt in den Schüttgutstrom ein und vermischt den Schüttgutstrom zugleich. Indem auf den Ebenen 17, 18 das Wasser aus verschiedenen Richtungen auf den Schüttgutstrom auftrifft, ist sichergestellt, dass das Schüttgut vollständig befeuchtet wird, bevor es durch den Auslass 16 des Fallrohrs 14 austritt.

Durch das aus den Düsen 20 austretende Wasser und den Schüttgutstrom, der sich durch das Fallrohr 14 bewegt, wirkt eine Kraft auf das Gummimaterial des flexiblen Wandabschnitts 34. Das Gummimaterial ist so ausgewählt, dass es durch diese Kräfte in Bewegung versetzt wird. Die Bewegung ist stark genug, um ein Ablagern des Schüttguts zu verhindern, jedoch nicht so stark, dass die Bewegung des Schüttgutstroms beeinträchtigt wird. Da die Düsen 20 über flexible Verbindungsleitungen 22 mit den Ringrohren 21 verbunden sind, können sich die Düsen 20 zusammen mit der flexiblen Wand des Fallrohrs 14 bewegen. Die Beweglichkeit des flexiblen Wandabschnitts 34 ist durch die Düsen 20 nur unwesentlich eingeschränkt.

In der erfindungsgemäßen Vorrichtung kann sich der Schüttgutstrom durch das gesamte Fallrohr 14 bewegen, ohne dass es zu Ablagerungen kommt. Im oberen Abschnitt 33, in dem die Wand des Fallrohrs 14 aus Stahl ist, ist das Schüttgut noch trocken und lagert sich deswegen nicht ab. Mit Wasser kommt das Schüttgut erst im flexiblen Wandabschnitt 34 in Berührung, zu Ablagerungen kommt es dort wegen der Bewegung der Wand nicht.

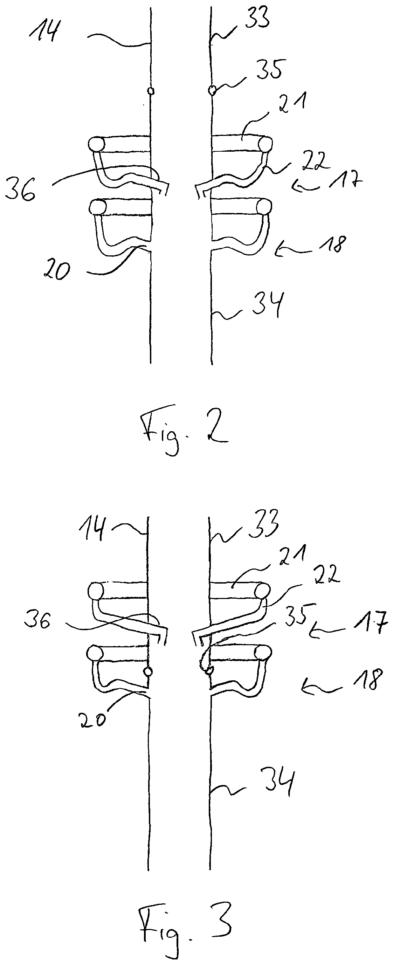

In Fig. 2 dienen nur die Düsen 20 der unteren Ebene 18 zum Befeuchten des Schüttguts. Aus den Düsen 20 der Ebene 18 tritt so viel Wasser aus, dass das Schüttgut vollständig und gleichmäßig befeuchtet wird. Die Düsen der oberen Ebene 17 sind als Reinigungsdüsen 36 ausgebildet, mit denen Ablagerungen wieder entfernt werden können, die sich trotz der Bewegung in dem flexiblen Wandabschnitt 34 gebildet haben. Die Reinigungsdüsen 36 ragen in das Innere des Fallrohrs 14 hinein und sind als sogenannte Zungendüsen ausgebildet, bei denen in der Verlängerung der Düsenachse eine Ablenkfläche angeordnet ist. Der Wasserstrahl trifft die Umlenkfläche und wird in Form eines Flachstrahls nach unten umgelenkt.

Haben sich Ablagerungen im flexiblen Wandabschnitt 34 gebildet, werden der Schüttgutstrom und die Wasserzufuhr zu den Düsen 20 unterbrochen. Anschließend werden die Reinigungsdüsen 36 in Betrieb gesetzt, um die Ablagerungen wieder zu entfernen. Der aus den Reinigungsdüsen 36 austretende Wasserstrahl trifft in einem Winkel von ungefähr 30° auf die Wand des Fallrohrs 14 und hebt die Ablagerungen ab. Nach dem Entfernen der Ablagerungen kann die Vorrichtung wieder ordnungsgemäß in Betrieb genommen und zum Befeuchten von Schüttgut verwendet werden.

In der Ausführungsform der Fig. 3 dienen ebenfalls nur die Düsen 20 der unteren Ebene 18 zum Befeuchten des Schüttguts, während die Düsen der oberen Ebene 17 als Reinigungsdüsen 36 ausgebildet sind. Im Unterschied zur Ausführungsform der Fig. 2 sind nicht beide Ebenen 17, 18 im flexiblen Wandabschnitt 34 angeordnet, sondern nur die Düsen der unteren Ebene 18. Die Reinigungsdüsen 36 sind im oberen Abschnitt 33 des Fallrohrs 14 angeordnet, in dem die Wand aus einem starren Material besteht. Da eine Bewegung der Reinigungsdüsen 36 nicht gewünscht ist, können die Verbindungsleitungen 22 zwischen den Reinigungsdüsen 36 und dem Ringrohr 21 ebenfalls starr sein.

Bei vielen Schüttgütern reicht es für eine vollständige und gleichmäßige Befeuchtung des Schüttguts aus, wenn eine Mehrzahl von Düsen 20 auf einer Ebene 18 angeordnet ist. Weder zusätzliche Düsen auf einer anderen Ebene noch Reinigungsdüsen sind für die Erfindung zwingend erforderlich.

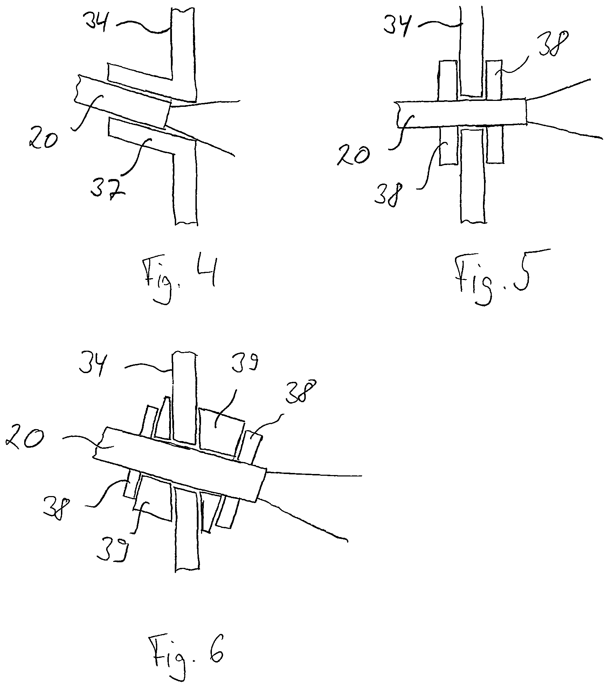

Die Figuren 4 bis 6 zeigen Ausschnitte aus dem flexiblen Wandabschnitt 34 bei verschiedenen Ausführungsformen der Erfindung. In Fig. 4 ist ein schlauchförmiger Ansatz 37 direkt in dem Gummimaterial des flexiblen Wandabschnitts 34 ausgebildet. Eine Düse 20 ist in den schlauchförmigen Ansatz 37 eingesteckt und in der passenden Position mit einer nicht dargestellten Schlauchschelle fixiert.

In Fig. 5 ist für die Aufnahme der Düse 20 lediglich eine Bohrung in dem Gummimaterial des flexiblen Wandabschnitts 34 vorgesehen. Die Düse 20, deren Außenfläche mit einem Gewinde versehen ist, wird in die Bohrung eingeführt und mit zwei Muttern 38 in der richtigen Position fixiert. Die Düse 20 ragt in das Fallrohr 14 hinein und ist rechtwinklig zur Wand des Fallrohrs 14 ausgerichtet.

In Fig. 6 ist die Düse 20 ebenfalls mit zwei Muttern 38 fixiert. Durch keilförmige Zwischenteile 39 erhält die Wasserdüse 20 eine geneigte Ausrichtung relativ zu der Wand des Fallrohrs 14. Die Zwischenteile 39 sind in ihrer Kontur an den flexiblen Wandabschnitt 34 angepasst.

## Patentansprüche

1. Vorrichtung zum Befeuchten eines Schüttguts, insbesondere zum Befeuchten von Kraftwerksfilteraschen, mit einem Fallrohr (14) und einem Behälter (10) für das Schüttgut, welcher oberhalb des Fallrohres (14) angeordnet ist, wobei am oberen Ende des Fallrohres ein Einlass (13) ausgebildet ist, durch den das Schüttgut in das Fallrohr (14) eintritt, wobei am Übergang zwischen Behälter (10) und Fallrohr (14) ein Verschluss ausgebildet ist und wobei am unteren Ende des Fallrohres ein Auslass (16) ausgebildet ist, durch den das Schüttgut in befeuchtetem Zustand austritt, wobei eine Wasserzuführung (20, 21, 22) zu dem Fallrohr (14) vorgesehen ist und wobei das Fallrohr (14) einen flexiblen Wandabschnitt (34) aufweist, **dadurch gekennzeichnet, dass** die Wasserzuführung (20, 21, 22) in dem flexiblen Wandabschnitt (34) des Fallrohrs (14) mündet.

2. Vorrichtung nach Anspruch 1, **dadurch gekennzeichnet, dass** der flexible Wandabschnitt sich von der Wasserzuführung (20, 21, 22) bis zum Auslass (16) des Fallrohrs (14) erstreckt.

3. Vorrichtung nach Anspruch 1 oder 2, **dadurch gekennzeichnet, dass** die Wasserzuführung (20, 21, 22) eine Mehrzahl von in das Fallrohr (14) mündenden Düsen (20) umfasst.

4. Vorrichtung nach Anspruch 3, **dadurch gekennzeichnet, dass** die Düsen (20) unabhängig voneinander mit dem flexiblen Wandabschnitt (34) verbunden sind.

5. Vorrichtung nach Anspruch 3 oder 4, **dadurch gekennzeichnet, dass** flexible Leitungen (22) vorgesehen sind, um den Düsen (20) Wasser zuzuführen.

6. Vorrichtung nach einem der Ansprüche 3 bis 5, **dadurch gekennzeichnet, dass** eine Mehrzahl von Düsen (20) auf einer Ebene (17, 18) angeordnet ist.

7. Vorrichtung nach einem der Ansprüche 3 bis 6, **dadurch gekennzeichnet, dass** die Düsen (20) nicht in den Innenraum des Fallrohrs (14) hineinragen.

8. Vorrichtung nach einem der Ansprüche 1 bis 7, **dadurch gekennzeichnet, dass** Reinigungsdüsen (36) vorgesehen sind, die in den Innenraum des Fallrohrs (14) hineinragen.

9. Vorrichtung nach Anspruch 8, **dadurch gekennzeichnet, dass** die Reinigungsdüsen (36) im flexiblen Wandabschnitt (34) des Fallrohrs (36) angeordnet sind.

10. Vorrichtung nach einem der Ansprüche 1 bis 9, **dadurch gekennzeichnet, dass** die Wand des Fallrohrs (14) in dem flexiblen Wandabschnitt (34) aus einem Gummimaterial besteht.

11. Vorrichtung nach Anspruch 10, **dadurch gekennzeichnet, dass** das Gummimaterial durch eine Einlage verstärkt ist.

## Claims

1. Device for moistening a bulk material, in particular for moistening power plant filter ashes, comprising a downpipe (14) and a container (10) for the bulk material, which is arranged above the downpipe (14), an inlet (13), through which the bulk material enters the downpipe (14), being formed at the upper end of the downpipe, a closure being formed at the transition between the container (10) and the downpipe (14) and an outlet (16), through which the bulk material leaves in the moistened state, being formed at the lower end of the downpipe, a water feed (20, 21, 22) to the downpipe (14) being provided and the downpipe (14) having a flexible wall portion (34), **characterized in that** the water feed (20, 21, 22) opens out in the flexible wall portion (34) of the downpipe (14).

2. Device according to Claim 1, **characterized in that** the flexible wall portion extends from the water feed (20, 21, 22) to the outlet (16) of the downpipe (14).

3. Device according to Claim 1 or 2, **characterized in that** the water feed (20, 21, 22) comprises a plurality of nozzles (20) opening out into the downpipe (14).

4. Device according to Claim 3, **characterized in that** the nozzles (20) are connected to the flexible wall portion (34) independently of one another.

5. Device according to Claim 3 or 4, **characterized in that** flexible lines (22) are provided to feed water to the nozzles (20).

6. Device according to one of Claims 3 to 5, **characterized in that** a plurality of nozzles (20) are arranged on one level (17, 18).

7. Device according to one of Claims 3 to 6, **characterized in that** the nozzles (20) do not project into the interior of the downpipe (14).

8. Device according to one of Claims 1 to 7, **characterized in that** cleaning nozzles (36), which project into the interior of the downpipe (14), are provided.

9. Device according to Claim 8, **characterized in that** the cleaning nozzles (36) are arranged in the flexible wall portion (34) of the downpipe (36).

10. Device according to one of Claims 1 to 9, **characterized in that** the wall of the downpipe (14) in the flexible wall portion (34) consists of a rubber material.

11. Device according to Claim 10, **characterized in that** the rubber material is reinforced by an insert.

## Revendications

1. Dispositif pour l'humidification d'un produit en vrac, plus particulièrement pour l'humidification d'axes de filtres de centrales électriques, avec un tuyau de descente (14) et un récipient (10) pour le produit en vrac, qui est disposé au-dessus du tuyau de descente (14), moyennant quoi, à l'extrémité supérieure du tuyau de descente, se trouve une entrée (13), par laquelle le produit en vrac entre dans le tuyau de descente (14), moyennant quoi, au niveau de la transition entre le récipient (10) et le tuyau de descente (14), se trouve une fermeture et moyennant quoi, au niveau de l'extrémité inférieure du tuyau de descente, se trouve une sortie (16) par laquelle le produit en vrac sort dans un état humide, moyennant quoi une alimentation d'eau (20, 21, 22) est prévue pour le tuyau de descente (14) et moyennant quoi le tuyau de descente (14) comprend une portion de paroi flexible (34), **caractérisé en ce que** l'alimentation d'eau (20, 21, 22) débouche dans la portion de paroi flexible (34) du tuyau de descente (14).

2. Dispositif selon la revendication 1, **caractérisé en ce que** la portion de paroi flexible s'étend de l'alimentation d'eau (20, 21, 22) jusqu'à la sortie (16) du tuyau de descente (14).

3. Dispositif selon la revendication 1 ou 2, **caractérisé en ce que** l'alimentation d'eau (20, 21, 22) comprend une pluralité de buses (20) débouchant dans le tuyau de descente (14).

4. Dispositif selon la revendication 3, **caractérisé en ce que** les buses (20) sont reliées indépendamment entre elles avec la portion de paroi flexible (34).

5. Dispositif selon la revendication 3 ou 4, **caractérisé en ce que** des conduites flexibles (22) sont prévues afin d'introduire de l'eau dans les buses (20).

6. Dispositif selon l'une des revendications 3 à 5, **caractérisé en ce qu'**une pluralité de buses (20) sont disposées sur un plan (17, 18).

7. Dispositif selon l'une des revendications 3 à 6, **caractérisé en ce que** les buses (20) ne dépassent pas à l'intérieur du tuyau de descente (14).

8. Dispositif selon l'une des revendications 1 à 7, **caractérisé en ce que** des buses de nettoyage (36) sont prévues, qui dépassent à l'intérieur du tuyau de descente (14).

9. Dispositif selon la revendication 8, **caractérisé en ce que** les buses de nettoyage (36) sont disposées dans la portion de paroi flexible (34) du tuyau de descente (36).

10. Dispositif selon l'une des revendications 1 à 9, **caractérisé en ce que** la paroi du tuyau de descente (14) est constituée, dans la portion de paroi flexible (34) d'un matériau de type caoutchouc.

11. Dispositif selon la revendication 10, **caractérisé en ce que** le matériau de type caoutchouc est renforcé par un insert.
